(19) Europäisches Patentamt / European Patent Office / Office européen des brevets

(11) **EP 3 217 410 B1**

(12) **EUROPEAN PATENT SPECIFICATION**

(45) Date of publication and mention
of the grant of the patent:
**12.08.2020 Bulletin 2020/33**

(21) Application number: **17721314.7**

(22) Date of filing: **27.02.2017**

(51) Int Cl.:
*H01B 7/08* (2006.01)  *H01B 7/02* (2006.01)
*C09D 201/00* (2006.01)  *H01B 3/30* (2006.01)
*H01B 3/02* (2006.01)  *H01F 27/32* (2006.01)
*H02K 3/32* (2006.01)  *H02K 3/40* (2006.01)
*H01B 7/28* (2006.01)  *H01F 5/06* (2006.01)

(86) International application number:
**PCT/KR2017/002175**

(87) International publication number:
**WO 2017/116218 (06.07.2017 Gazette 2017/27)**

(54) **CORONA-RESISTANT FLAT WIRE**

CORONABESTÄNDIGER FLACHER WICKELDRAHT

FIL PLAT RÉSISTANT À L'EFFET COURONNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2016 KR 20160027872**

(43) Date of publication of application:
**13.09.2017 Bulletin 2017/37**

(73) Proprietor: **LS Cable & System Ltd.
Anyang-si, Gyeonggi-do 14119 (KR)**

(72) Inventors:
• **LEE, Jae-Geon**
**Seoul 04153 (KR)**
• **HONG, Young-Ho**
**Seoul 06305 (KR)**

• **PARK, Jae-Min**
**Daegu 41265 (KR)**
• **CHOI, Sin-Young**
**Gunsan-si**
**Jeollabuk-do 54147 (KR)**

(74) Representative: **advotec.
Patent- und Rechtsanwälte
Widenmayerstrasse 4
80538 München (DE)**

(56) References cited:
**WO-A1-2015/098637    JP-A- 2006 134 813
JP-A- 2009 123 418    JP-A- 2010 055 965
JP-A- 2013 033 669    KR-A- 20150 087 102
KR-A- 20150 101 023    KR-A- 20150 101 023
KR-A- 20160 004 256    US-A1- 2015 206 624**

**Description**

TECHNICAL FIELD

The present invention relates to a corona-resistant flat winding wire, and more particularly, to a corona-resistant flat winding wire with an insulation coating layer having not only high a corona-resistant property but also a high adhesive property and high flexibility.

BACKGROUND ART

In general, an enamel wire is an insulated wire which transforms electric energy into mechanical energy and vice versa through magnetic energy conversion when it is wound in the form of coil in an electric device.

Generally, the enamel wire includes a conductor wire such as a copper wire, and an insulation coating layer covering the conductor wire. The insulation coating layer of the enamel wire is formed by coating a surface of a conductor with an insulating varnish consisting of an organic solvent and polymer resin and then drying and hardening the resultant structure at high temperature, e.g., 400 °C or more.

The enamel wire has been used in various fields, including heavy electric machines, automobile parts, household appliances, medical devices, core materials of aerospace industry, etc. However, if the enamel wire is applied to a motor in a high-voltage environment, fine cracks may occur between or inside insulating films forming the insulation coating layer when a corona-resistant property, etc. is not sufficient. Thus, a corona phenomenon that an electric field is concentrated may occur between or inside the insulating films, thereby causing a partial discharge to occur.

A collision between charged particles generated due to the corona discharge may generate heat and destruct the insulation coating layer and thus dielectric breakdown may occur . Recently, systems using an inverter motor, etc. have been used for energy conservation. In such a system, there have been many cases in which dielectric breakdown is caused by inverter surge . It has been found that the dielectric breakdown caused by inverter surge is due to a corona discharge caused by overvoltage due to inverter surge.

An enamel wire in which an inorganic insulating particle such as silica or titanium dioxide is added to resin for forming an insulation coating layer to give a sufficient corona-resistant property to the enamel wire has been known. The inorganic insulating particle improves heat conductivity, decreases thermal expansion coefficient, and increases strength, as well as giving a corona-resistant property to the enamel wire.

However, as the content of the inorganic insulating particle is increased, the corona-resistant property increases but an adhesion between a conductor and the insulation coating layer and the flexibility of the insulation coating layer decreases . Thus, when an enamel wire with an insulation coating layer containing a large amount of inorganic insulating particles is applied to a coil of an electric device, many cracks may occur in the insulation coating layer. Accordingly, a desired corona resistance effect cannot be achieved.

Enamel wires are classified into a round enamel wire and a flat enamel wire according to the shape of a cross section thereof. The flat enamel wire is more advantageous than the round enamel wire, in that an empty space may be decreased when the flat enamel wire is wound, alignment winding maybe performed to increase electric conversion efficiency, and operating noise may be decreased. Recently, there is a trend that demands for a flat enamel wire increase to a large extent, owing to the advantages.

However, the flat enamel wire has a structure in which an electric field is concentrated at corner parts of a conductor. Furthermore, when an insulation coating layer is formed on an outer circumference of the conductor, the insulation coating layer at the corner parts of the conductor is thinner than the insulating coating layer at flat parts of the conductor, and the thickness of the insulation coating layer decreases as the length of the flat parts of the conductor is increased. Accordingly, it is difficult to control the insulation coating layer to have a uniform thickness and a corona-resistant property may be thus very low. Thus, it is very difficult to design a thickness of an insulation coating layer to achieve a desired corona-resistant property. This problem may become worse when the insulation coating layer is formed by stacking two or more types of coating layers having different viscosities and surface tensions.

Accordingly, there is an increasing need for a corona-resistant flat winding wire with an insulation coating layer having a high corona-resistant property by precisely designing a thickness of the insulation coating layer even when the insulation coating layer is formed by stacking two or more types of coating layers having different viscosities and surface tensions, and having a high adhesion property and high flexibility which are in a trade-off relation with the corona-resistant property.

## DETAILED DESCRIPTION OF THE INVENTION

### TECHNICAL PROBLEM

The present invention is directed to a flat winding wire with an insulation coating layer having a high corona-resistant property.

The present invention is also directed to a flat winding wire with an insulation coating layer having not only a high corona-resistant property but also a high adhesive property and high flexibility which are in a trade-off relation with the corona-resistant property.

Flat winding wires similar to those of the present invention are known from e.g. JP 2010/055965, JP 2009/123418, WO 2015/098637 and KR 2015/0101023. The wire of KR 2015/0101023 includes a surge-resistant varnish layer.

### TECHNICAL SOLUTION

In order to solver the technical problem, the present inventions provide, as defined by the claims

A corona-resistant flat winding wire comprising: a conductor wire having a cross section with flat parts and curved parts; and an insulation coating layer covering the conductor wire, wherein the insulation coating layer comprises: at least one surge-resistant varnish layer including polymer resin and an inorganic nanoparticle; and at least one insulating varnish layer, in which one of the at least one insulating varnish layers is adhered to the conductor wires and stacked below the surge-resistant varnish layers, including polymer resin, and wherein a rate of increase in a thickness of the surge-resistant varnish layer is greater than a rate of increase in a thickness of the insulating varnish layer, as defined in Equation 1 as follows:

$$[\text{Equation 1}]$$

$$\text{thickness increase rate (\%)} = \{(\text{layer thickness at curved part} - \text{layer thickness at flat part})/\text{layer thickness at flat part}\} \times 100,$$

wherein layer thickness at curved part represents an average thickness of the surge-resistant varnish layer or the insulating varnish layer measured at the curved parts of the conductor wire, and layer thickness at flat part represents an average thickness of the surge-resistant varnish layer or the insulating varnish layer measured at the flat parts of the conductor wire; The corona-resistant flat winding wire, wherein the rate of increase in the thickness of the surge-resistant varnish layer is 10 to 50%;

The corona-resistant flat winding wire, wherein an average thickness of the insulation coating layer is 70 to 120 $\mu$m;

The corona-resistant flat winding wire, wherein the average thickness of the surge-resistant varnish layer is 30 to 50% of the average thickness of the insulation coating layer, and the average thickness of the insulating varnish layer is 50 to 70% of the average thickness of the insulation coating layer;

The corona-resistant flat winding wire, wherein the insulating varnish layer comprises: a first insulating varnish layer stacked between the conductor wire and the surge-resistant varnish layer; and a second insulating varnish layer stacked on the surge-resistant varnish layer, wherein each of the first insulating varnish layer and the second insulating varnish layer independently has an average thickness which is 20 to 40% of the average thickness of the insulation coating layer;

The corona-resistant flat winding wire, wherein thicknesses of the insulation coating layer at the curved parts are greater than those of the insulation coating layer at the flat parts;

The corona-resistant flat winding wire, wherein a radius of curvature $R_1$ of a round of each of the curved parts is greater than a radius of curvature $R_2$ of the insulation coating layer at the curved parts;

The corona-resistant flat winding wire, wherein the conductor wire is formed of oxygen-free electrolyte copper;

The corona-resistant flat winding wire, wherein polymer resin contained in the insulation coating layer comprises at least one selected from the group consisting of polyamide-imide resin, polyimide resin, polyamide resin, polyvinyl formal resin, polyurethane resin, heat-resistant polyurethane resin, polyester resin, and polyesterimide resin;

The corona-resistant flat winding wire, wherein the inorganic nanoparticle comprises at least one selected from the group consisting of silica, alumina, titaniumdioxide, zirconia, yttria, mica, clay, zeolite, chromium oxide, zinc oxide, iron oxide, magnesiumoxide, calciumoxide, scandiumoxide, and barium oxide;

The corona-resistant flat winding wire, wherein content of the inorganic nanoparticle is 5 to 15 parts by weight relative to 100 parts by weight of the polymer resin contained in the surge-resistant varnish layer;

The corona-resistant flat winding wire, wherein the inorganic nanoparticle has a size of 5 to 100 nm, and a surface thereof is modified to have a hydrophobic property;

The corona-resistant flat winding wire, wherein, when the surge-resistant varnish layer is formed on the conductor wire, the surge-resistant varnish layer additionally comprises an adhesion improver, and when the insulating varnish layer includes a first insulating varnish layer formed on the conductor wire, the first insulating varnish layer additionally comprises an adhesion improver, wherein the adhesion improver comprises at least one selected from the group consisting of a melamine-based adhesive, an amine-based adhesive, a mercaptan-based adhesive, and a polycarbodiimide adhesive;

A corona-resistant flat winding wire comprising: a conductor wire having a cross section with flat parts and curved parts; and an insulation coating layer covering the conductor wire, wherein the insulation coating layer comprises: at least one surge-resistant varnish layer including polymer resin and an inorganic nanoparticle; and at least one insulating varnish layer, in which one of the at least one insulating varnish layers is adhered to the conductor wires and stacked below the surge-resistant varnish layer, including polymer resin, and a rate of increase in a thickness of the surge-resistant varnish layer is greater than a rate of increase in a thickness of the insulation coating layer, as defined in Equation 1 as follows:

$$[\text{Equation 1}]$$

$$\text{thickness increase rate (\%)} = \{(\text{layer thickness at curved part} - \text{layer thickness at flat part})/\text{layer thickness at flat part}\} \times 100,$$

wherein layer thickness at curved part represents an average thickness of the surge-resistant varnish layer or the insulating coating layer measured at the curved parts of the conductor wire, and layer thickness at flat part represents an average thickness of the surge-resistant varnish layer or the insulation coating layer measured at the flat parts of the conductor wire;

The corona-resistant flat winding wire, wherein the rate of increase in thickness of the surge-resistant varnish layer is 10 to 50%;

The corona-resistant flat winding wire, wherein an average thickness of the insulation coating layer is 70 to 120 $\mu$m;

The corona-resistant flat winding wire, wherein the average thickness of the surge-resistant varnish layer is 30 to 50% of the average thickness of the insulation coating layer, and the average thickness of the insulating varnish layer is 50 to 70 % of the average thickness of the insulation coating layer;

The corona-resistant flat winding wire, wherein the insulating varnish layer comprises: a first insulating varnish layer stacked between the conductor wire and the surge-resistant varnish layer; and a second insulating varnish layer stacked on the surge-resistant varnish layer, wherein each of the first insulating varnish layer and the second insulating varnish layer independently has an average thickness which is 20 to 40% of the average thickness of the insulation coating layer; and

The corona-resistant flat winding wire, wherein a radius of curvature $R_1$ of a round of each of the curved parts is greater than a radius of curvature $R_2$ of the insulation coating layer at each of the curved parts.

ADVANTAGEOUS EFFECTS

A corona-resistant flat winding wire according to the present invention has a structure in which an electric field is concentrated at corner parts, and an insulation coating layer has a different thickness at a coated region and is formed by stacking two or more types of insulating films having different viscosities and surface tensions. Thus, a desire corona-resistant property may be achieved even when it is very difficult to design a thickness of the insulation coating layer.

Furthermore, the corona-resistant flat winding wire according to the present invention has a high corona-resistant property but has a high adhesion property and high flexibility which are in a trade-off relation with the corona-resistant property.

DESCRIPTION OF THE DRAWINGS

FIG. 1 schematically illustrates a structure of a cross section of a corona-resistant flat winding wire according to an embodiment of the present invention.

FIG. 2 schematically illustrates a structure of a cross section of a corona-resistant flat winding wire according to another embodiment of the present invention.

FIG. 3 illustrates a method of measuring a thickness of an insulation coating layer at each of curved parts and flat ) parts of the cross section of the corona-resistant flat winding wire of FIG. 1.

FIG. 4 illustrates a method of measuring a thickness of an insulation coating layer at each of curved parts and flat parts of the cross section of the corona-resistant flat winding wire of FIG. 2.

MODE OF THE INVENTION

Hereinafter, exemplary embodiments of the present invention will be described in detail with reference to the accompanying drawings. The present invention is not, however, embodied to these embodiments and may be embodied in many different forms. Rather, these embodiments are provided so that this disclosure will be thorough and complete and will fully convey the concept of the invention to those of ordinary skill in the art. In the drawings, the thickness of layers and regions may be exaggerated for clarity. The same reference numerals represent the same elements throughout the specification.

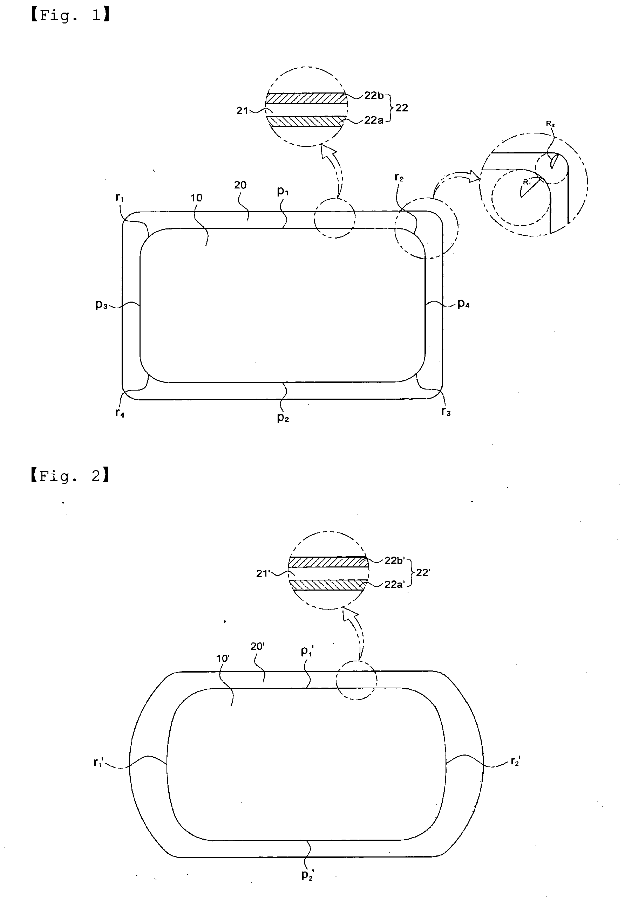

FIGS. 1 and 2 schematically illustrate structures of cross sections of corona-resistant flat winding wires according to embodiments of the present invention.

As illustrated in FIGS. and 2, the corona-resistant flat winding wires according to the present invention include -conductor wires 10 and 10' each serving as a path through which current flows, and insulation coating layers 20 and 20' covering the conductor wires 10 and 10' to prevent current flowing through the conductor wires 10 and 10' from leaking to the outside.

The conductor wires 10 and 10' are formed of a metal having high conductivity, e.g., copper, a copper alloy, aluminum, an aluminum alloy, or the like. The conductor wires 10 and 10' may be formed of oxygen-free electrolyte copper when solderability is taken into account. The conductor wires 10 and 10' having a flat cross section may have four upper, lower, left, and right flat parts $p_1$, $p_2$, $p_3$, and $p_4$ which are planar parts and four curved parts $r_1$, $r_2$, $r_3$, and $r_4$ which are corner parts as illustrated in FIG. 1, or may have two upper and lower flat parts $p_1'$ and $p_2'$ which are planar parts and two curved parts $r_1'$ and $r_2'$ which are corner parts as illustrated in FIG. 2.

In the conductor wire 10 of FIG. 1, each of the curved parts $r_1$, $r_2$, $r_3$, and $r_4$ may a round having a specific radius of curvature $R_1$. The radius of curvature $R_1$ may be greater than a radius of curvature $R_2$ of the insulation coating layers 20 and 20' at the curved parts $r_1$, $r_2$, $r_3$, and $r_4$. The insulation coating layers 20 and 20' covering the conductor wires 10 and 10', and a surge-resistant varnish layer and an insulating varnish layer which will be described below include flat parts and curved parts corresponding to the flat parts and the curved parts of the conductor wires 10 and 10'. When the radius of curvature $R_2$ of the insulation coating layers 20 and 20' is greater than the radius of curvature $R_1$ of the conductor wires 10 and 10', the insulation coating layers 20 and 20' may have insufficient thicknesses at the curved parts $r_1$, $r_2$, $r_3$, and $r_4$ and may be thus less insulated.

The insulation coating layers 20 and 20' may include at least one selected from the group consisting of polyamide-imide resin, polyimide resin, polyamide resin, polyvinyl formal resin, polyurethane resin, heat-resistant polyurethaneresin, polyester resin, polyesterimide resin, etc. In particular, when the corona-resistant flat winding wire is used in an electric car or a hybrid car, the insulation coating layers 20 and 20' may include polyamide-imide resin having high heat-resistant property.

In detail, there are demands for a small-sized and high output motor for use in an electric or hybrid car. When the amount of current is increased to satisfy the demands for a high output motor, the volume of a flat winding wire applied to the motor increases and thus the demands for a small-sized motor is not satisfied.

Thus, a voltage to be applied may be increased to satisfy the demands for a high-output motor without increasing the flat winding wire. In this case, a surge voltage generated when an inverter produces a sine wave needed to drive a motor may increase, and dielectric breakdown may occur due to a partial discharge.

Thus, an insulation coating layer of the flat winding wire may be formed thickly to prevent the partial discharge from occurring. However, in this case, the adhesion, film crack resistance, etc. of the winding may decrease and thus motor size may increase and a space factor may decrease, thereby lowering motor efficiency.

Thus, a thickness of the insulation coating layer of the flat winding wire should be minimized and a high surge-resistant property should be secured in order to achieve a small-sized and high-output motor to which the flat winding wire is applied while satisfying a partial discharge inception voltage (PDIV) required for the flat winding wire.

In this situation, an average thickness of the insulation coating layers 20 and 20' may be 70 to 120 $\mu$m. If the average thickness of the insulation coating layers 20 and 20' is less than 70 $\mu$m, a dielectric breakdown voltage (BDV) of the flat winding wire may decrease. In contrast, if the average thickness of the insulation coating layers 20 and 20' is greater than 120 $\mu$m, the flat winding wire may be twisted or bent and thus cracks may occur in the insulation coating layers 20 and 20' and a space factor may decrease when the flat winding wire is applied to a motor or the like. Thus the performance of the motor, etc. may decrease.

The insulation coating layers 20 and 20' may have a multi-layer structure including the same type of resin or different types of resin as illustrated in FIGS. 1 and 2. In detail, in order to achieve a corona-resistant property, the insulation coating layers 20 and 20' may include one or more surge-resistant varnish layers 21 and 21' in which an inorganic nanoparticle is uniformly dispersed in the resin, first insulating varnish layers 22a and 22a' stacked below the surge-resistant varnish layers 21 and 21' to increase an adhesion with the conductor wires 10 and 10', and/or second insulating varnish layers 22b and 22b' stacked on the surge-resistant varnish layers 21 and 21' to protect the surge-resistant varnish layers 21 and 21' from external shocks or pressure and to achieve smooth surface features of the insulation coating layers 20 and 20'.

Here, an average thickness of the surge-resistant varnish layers 21 and 21' may be 30 to 50% of the average thickness of the insulation coating layers 20 and 20', and an average of the insulating varnish layers 22 and 22' may be 50 to 70% of the average thickness of the insulation coating layers 20 and 20'. When the insulating varnish layers 22 and 22' include all the first insulating varnish layers 22a and 22a' stacked below the surge-resistant varnish layers 21 and 21' and the second insulating varnish layers 22b and 22b' stacked on the surge-resistant varnish layers 21 and 21', each of the first insulating varnish layers 22a and 22a' and the second insulating varnish layers 22b and 22b' may have an average thickness is 20 to 40% of the average thickness of the insulation coating layers 20 and 20'.

When the average thickness of the surge-resistant varnish layers 21 and 21' is less than 30% of that of the insulation coating layers 20 and 20', a partial discharge inception voltage (PDIV) of the flat winding wire may be low. In contrast, when the average thickness of the surge-resistant varnish layers 21 and 21' exceeds 50% of that of the insulation coating layers 20 and 20', the film crack resistance of the insulation coating layers 20 and 20' may be low.

The inorganic nanoparticle may prevent dielectric breakdown from occurring due to a corona discharge caused by inverter surge, increase heat conductivity, decrease thermal expansion coefficient, and increase the strength of an enamel wire. For example, the inorganic nanoparticle may include at least one type of an inorganic nanoparticle selected from the group consisting of silica, alumina, titanium dioxide, zirconia, yttria, mica, clay, zeolite, chromium oxide, zinc oxide, iron oxide, magnesium oxide, calcium oxide, scandium oxide, barium oxide, etc.

Methods of manufacturing resin having a dispersed inorganic nanoparticle have already been known. For example, ball milling disclosed in US patent No. 6, 403, 890, a mechanical method using high shear mixing disclosed in US patent No. 4, 493, 873, simple agitation disclosed in USpatent No. 6, 180, 888, a sol-gel method disclosed in Japanese laid-open patent publication No. 2003-36731, etc. may be used.

High dispersion characteristics, ultrafine particle size (preferably, a nano size of 4 to 100 nm), a high specific surface area (BET) (preferably, a specific surface area of 100 to 300 $m^2/g$), high purity (preferably, purity of 95% or more), spherical particles, a porous member, etc. are required to effectively exhibit a corona-resistant property using the inorganic nanoparticle. Various methods of improving the characteristics have already been known.

For example, German patent No. 4209964 discloses inorganic nanoparticles, the surfaces of which are modified to be easily dispersed within resin, e.g., inorganic nanoparticles with silanized surfaces. Generally, the inorganic nanoparticles have hydrophilic surfaces and are thus difficult to aggregate and be dispersed within the resin having a hydrophobic property. Thus, in order to facilitate the dispersion of the inorganic nanoparticles within the resin, the surfaces of the inorganic nanoparticles may be modified to have a hydrophobic property by coating the surfaces of the inorganic nanoparticles with a surface modifier having functional group to be covalently or non-covalently bound to the resin.

In detail, the surface-modified inorganic nanoparticles may be prepared by forming a mixing liquid by adding the inorganic nanoparticles to a solvent such as toluene, xylene, ethanol, or cresol, adding one or more types of surface modifiers selected from the group consisting of amine, epoxy, thiol, carboxyl acid, sulfonic acid, phosphoric acid, phosphinic acid, cyanic acid, and silane to the mixed liquid to be reacted with the mixed liquid.

The content of the inorganic nanoparticle may be 5 to 15 parts by weight relative to 100 parts by weight of the resin. When the content of the inorganic nanoparticle is less than 5 parts by weight, a corona-resistant property may be insufficient. When the content of the inorganic nanoparticle is greater than 15 parts by weight, an adhesion between the conductor wires 10 and 10' and the insulation coating layers 20 and 20', the flexibility of the insulation coating layers 20 and 20', etc. may be low.

The inorganic nanoparticle may include one inorganic nanoparticle solely or two or more inorganic nanoparticles which agglomerate together, and has a size of about 4 to 100 nm. When the inorganic nanoparticle has a size of less than 4 nm, an effect of increasing a corona-resistance property of the flat winding wire may be low. When the inorganic nanoparticle has a size of greater than 100 nm, an adhesion between the conductor wires 10 and 10' and the insulation coating layers 20 and 20', film crack resistance, flexibility, etc. may be low. Furthermore, a charged particle generated due to a corona discharge may collide against the inorganic nanoparticle and thus the prepared insulation coating layers 20 and 20' may be lowered in quality.

The insulation coating layers 20 and 20' may include the first insulating varnish layers 22a and 22a' below the surge-resistant varnish layers 21 and 21' to additionally improve the adhesion between the conductor wires 10 and 10' and the insulation coating layers 20 and 20'. The first insulating varnish layers 22a and 22a' may be more easily adhered to the conductor wires 10 and 10' than the surge-resistant varnish layers 21 and 21' each containing an inorganic nanoparticle.

In the insulation coating layers 20 and 20', the first insulating varnish layers 22a and 22a' and/or the surge-resistant varnish layers 21 and 21' may additionally include an adhesive, i.e., an adhesion improver, to improve the adhesion between the conductor wires 10 and 10' and the insulation coating layers 20 and 20'. The adhesive may include one or more types of adhesives selected from the group consisting of an amine-based adhesive such as alkoxy melamine resin, e.g., butoxy, an amine-based adhesive such as trialkylamine, a mercaptan-based adhesive such as mercaptobenzimidazole, polycarbodiimide, etc. The content of the adhesive may be 1 to 3 parts by weight relative to 100 parts by weight of resin contained in each of these varnish layers.

A corona-resistant flat winding wire according to the present invention has a structure in which an electric field is concentrated on the curved parts $r_1$, $r_2$, $r_3$, $r_4$, $r_1'$, and $r_2'$ which are corner parts, and the insulation coating layers 20 and 20' have different thicknesses on regions of the conductor wires 10 and 10' when the insulation coating layers 20 and 20' are formed on surfaces of the conductor wires 10 and 10' by coating dies. In particular, when the insulation coating layers 20 and 20' include two or more types of varnish layers having different viscosities and surface tensions, i.e., the first insulating varnish layer, the surge-resistant varnish layer, and the second insulating varnish layer, the ratios between the thicknesses of the varnish layers on the regions of the conductor wires 10 and 10' are different due to different physical properties of the varnish layers. Thus, it is very different to design thicknesses of the insulation coating layers 20 and 20' to achieve a desired corona-resistant property while maintaining adhesion and flexibility which are in a trade-off relation with the corona-resistant property.

In this relation, the present inventors have achieved the present invention by repeatedly conducting simulations while adjusting the shape of coating dies to design the insulation coating layers 20 and 20' having a desired corona-resistant property while maintaining adhesion, flexibility, etc. which are in a trade-off relation with the corona-resistant property, and particularly, by deducing the thicknesses of regions of the insulation coating layers 20 and 20', a correlation between the thicknesses, the ratio between the thicknesses of regions of two or more types of different insulating layers included in the insulation coating layers 20 and 20', etc.

In detail, in a corona-resistant flat winding wire according to the present invention, a rate of increase in the thickness of the surge-resistant varnish layers 21 and 21' defined in Equation 1 below is greater than a rate of increase in the thickness of the insulation coating layers 20 and 20' defined in Equation 1 below, and particularly, a rate of increase in the thickness of the insulating varnish layers 22 and 22'.

[Equation 1]

$$\text{Thickness increase ratio (\%)} = \{(\text{layer thickness at curved part} - \text{layer thickness at flat part}) / \text{layer thickness at flat part}\} \times 100$$

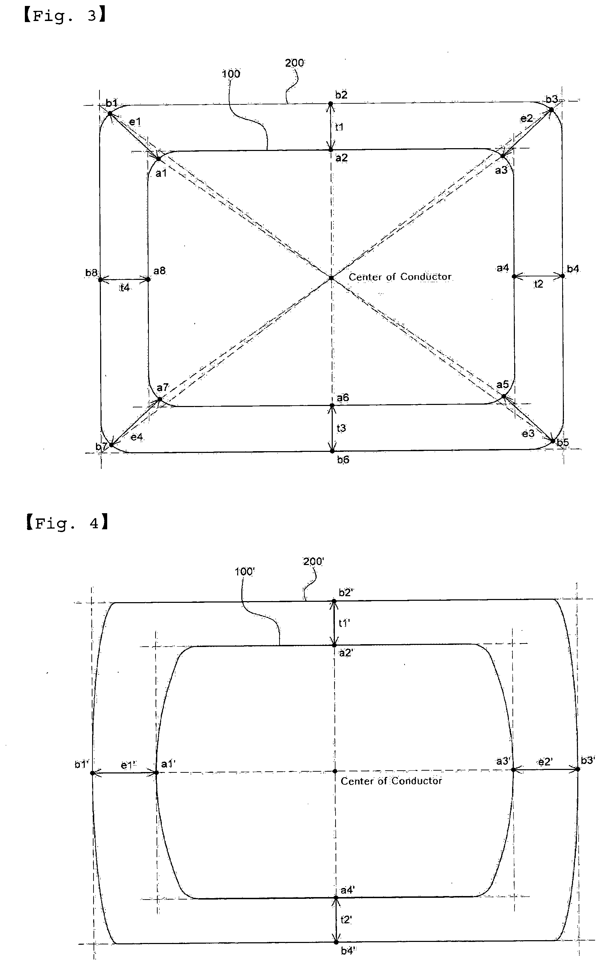

In Equation 1 above, the "layer thickness at curved part" represent an average value of thicknesses e1, e2, e3, e4, e1', and e2' of the surge-resistant varnish layer, the insulating varnish layer, or the insulation coating layer, obtained by measuring straight-line distances to measurement points b1, b3, b5, b7, b1', and b3' from reference points a1, a3, a5, a7, a1', and a3' on the curved parts $r_1$, $r_2$, $r_3$, $r_4$, $r_1'$, and $r_2'$ of FIG. 3 or 4. The "layer thickness at flat part" represents an average value of thicknesses t1, t2, t3, t4, t1', and t2' of the surge-resistant varnish layer, the insulating varnish layer, or the insulation coating layer, obtained by measuring straight-line distances to measurement points b2, b4, b6, b8, b2', and b4' from reference points a2, a4, a6, a8, a2', and a4' on the flat parts $p_1$, $p_2$, $p_3$, $p_4$, $p_1'$, and $p_2'$ of FIG. 3 or 4.

Here, the reference points a1, a3, a5, and a7 on the curved parts of FIG. 3 may be defined as points at the intersection of lines respectively connecting a center point on a rectangle forming a cross section of a base layer 100 and the corners of the rectangle and an outline of curved parts of the base layer 100, when it is assumed that the cross section of the base layer 100 corresponding to the conductor wire, the surge-resistant varnish layer, or the insulating varnish layer formed directly below a thickness measurement layer 200 which is a layer thickness measurement target has a rectangular shape indicated by a broken line. The measurement points b1, b3, b4, and b7 may be defined as points at the intersection of lines respectively connecting a center point on a rectangle forming a cross section of the thickness measurement layer 200 and the corners of the rectangle and an outline of curved parts of the thickness measurement layer 200, when it is assumed that the cross section of the thickness measurement layer 200 has a rectangular shape.

The reference points a2, a4, a6, and a8 on the flat parts of FIG. 3 may be defined as points at the intersection of lines respectively connecting a center point on a rectangle forming a cross section of the base layer 100 and the sides of the rectangle and an outline of the flat parts of the base layer 100. The measurement points b2, b4, b6, and b8 may be defined as points at the intersection of lines respectively connecting a center point on a rectangle forming a cross section of the thickness measurement layer 200 and the corners of the rectangle and an outline of the flat parts of the thickness measurement layer 200, when it is assumed that a cross section of the thickness measurement layer 200 has a rectangular shape.

The reference points a1', a2', a3', and a4' on the curved parts and the flat parts of FIG. 4 may be defined as points at the intersection of lines respectively connecting a center point on a rectangle forming a cross section of a base layer 100' and the sides of the rectangle and an outline of curved parts or flat parts of the base layer 100', when it is assumed that the cross section of the base layer 100' corresponding to a conductor wire, a surge-resistant varnish layer, or an insulating varnish layer formed directly below a thickness measurement layer 200' which is a layer thickness measurement target has a rectangular shape indicated by a broken line. The measurement points b1', b2', b3', b4' on the curved parts and the flat parts may be defined as points at the intersection of lines respectively connecting a center point on a rectangle forming a cross section of the thickness measurement layer 200' and center points on the sides of the rectangle and an outline of curved parts or flat parts of the thickness measurement layer 200', when it is assumed that the cross section of the thickness measurement layer 200' has a rectangular shape.

In detail, when a rate of increase of the thickness of the surge-resistant varnish layers 21 and 21' is less than a rate of increase in the thickness of the insulating varnish layers 22 and 22', a partial discharge inception voltage (PDIV), etc. of the flat winding wire may be low due to an electric field concentrated on the curved parts of the flat winding wire, and an adhesion between the surge-resistant varnish layers 21 and 21' and the conductor wires 10 and 10' may be insufficient.

In particular, the rate of increase in the thickness of the surge-resistant varnish layers 21 and 21' may be 10 to 50%. That is, the thickness of the surge-resistant varnish layers 21 and 21' at the curved parts may be greater by 10 to 50% than that of the surge-resistant varnish layers 21 and 21' at the flat parts.

When the thicknesses of the surge-resistant varnish layers 21 and 21' at the curved parts are less than 10% of those of the surge-resistant varnish layers 21 and 21' at the flat parts, the partial discharge inception voltage (PDIV), etc. of the flat winding wire may be low. In contrast, when the thicknesses of the surge-resistant varnish layers 21 and 21' at the curved parts are greater than 50% of those of the surge-resistant varnish layers 21 and 21' at the flat parts, the surge-resistant varnish layers 21 and 21' at the flat parts may be excessively thin and thus the partial discharge inception voltage (PDIV), etc. of the flat winding wire may be low, an adhesion between the conductor wires 10 and 10' and the insulation coating layers 20 and 20' may be low, and the thicknesses of the insulation coating layers 20 and 20' at the curved parts may be excessively thick. Thus, the flexibility of the flat winding wire may be low and the insulating varnish layers 22 and 22' at the curved parts may be relatively thin, thereby decreasing film crack resistance.

In a corona-resistant flat winding wire according to the preset invention, the thicknesses of the insulation coating layers 20 and 20' at the curved parts $r_1$, $r_2$, $r_3$, $r_4$, $r_1'$, and $r_2'$ may be greater than those of the insulation coating layers 20 and 20' at the flat parts $p_1$, $p_2$, $p_3$, $p_4$, $p_1'$, and $p_2'$. The curved parts $r_1$, $r_2$, $r_3$, $r_4$, $r_1'$, and $r_2'$ are weak to dielectric breakdown or a partial discharge caused by the concentration of an electric field. Thus, the insulation coating layers 20 and 20' may be formed to be thicker than the flat parts $p_1$, $p_2$, $p_3$, $p_4$, $P_1'$, and $p_2'$, thereby increasing insulation performance.

In detail, the thicknesses of the insulation coating layers 20 and 20' at the curved parts $r_1$, $r_2$, $r_3$, $r_4$, $r_1'$, and $r_2'$ may be 100 to 150% of those of the insulation coating layers 20 and 20' at the flat parts $p_1$, $p_2$, $p_3$, $p_4$, $p_1'$, and $p_2'$. When the thicknesses of the insulation coating layers 20 and 20' at the curved parts $r_1$, $r_2$, $r_3$, $r_4$, $r_1'$, and $r_2'$ are less than 100% of those of the insulation coating layers 20 and 20' at the flat parts $p_1$, $p_2$, $p_3$, $p_4$, $p_1'$, and $p_2'$, dielectric breakdown performance and a corona-resistant property are low. When the thicknesses of the insulation coating layers 20 and 20' at the curved parts $r_1$, $r_2$, $r_3$, $r_4$, $r_1'$, and $r_2'$ are greater than 150% of those of the insulation coating layers 20 and 20' at the flat parts $p_1$, $p_2$, $p_3$, $p_4$, $p_1'$, and $p_2'$, an adhesion between the insulation coating layers 20 and 20' and the conductor wires 10 and 10' are low, coating material costs increase, and alignment winding may be difficult to be conducted due to an increase in the thickness of the coated curved parts when a flat winding wire is wound.

[Examples]

1. Preparation examples

Samples of a flat winding wire having a surge-resistant varnish layer and an insulating varnish layer having thicknesses as shown in Table 1 below were prepared. Here, the insulating varnish layer included a first insulating varnish layer between the surge-resistant varnish layer and a flat conductor, and a second insulating varnish layer stacked on the surge-resistant varnish layer. The thickness of the insulating varnish layer was equal to the sum of the thickness of the first insulating varnish layer and the thickness of the second insulating varnish layer.

In the samples, a degree of coating distribution representing a thickness deviation of an insulation coating layer coated onto a conductor wire (i.e., the thickness of a thickest part of the insulation coating layer/the thickness of a thinnest part of the insulation coating layer) was 1.5 or less.

In Table 1 below, a unit of thickness is $\mu$m.

[Table 1]

| | | Embodiments | | | | Comparative examples | | |
|---|---|---|---|---|---|---|---|---|
| | | 1 | 2 | 3 | 4 | 1 | 2 | 3 |
| surge-resistant varnish layer | flat parts | 29.13 | 31.13 | 30.13 | 28.13 | 30.05 | 29.58 | 31.13 |
| | curved parts | 34.65 | 39.66 | 40.68 | 40.8 | 30.27 | 31.64 | 48.70 |
| | thickness increase rate (%) | 18.95 | 27.40 | 35.01 | 45.04 | 0.73 | 6.96 | 56.44 |
| Insulating varnish layer | flat parts | 51.20 | 46.92 | 49.64 | 49.50 | 48.48 | 49.90 | 47.40 |
| | curved parts | 59.92 | 53.80 | 58.42 | 58.02 | 60.33 | 59.40 | 50.12 |
| | thickness increase rate (%) | 17.03 | 14.66 | 17.69 | 17.21 | 24.44 | 19.04 | 5.74 |
| Insulating coating | flat part | 80.33 | 78.05 | 79.77 | 77.63 | 78.53s | 79.48 | 78.53 |
| | curved | 94.57 | 93.46 | 99.1 | 98.82 | 90.60 | 91.04 | 98.82 |
| layer | parts | | | | | | | |
| | thickness increase rate (%) | 17.73 | 19.74 | 24.23 | 27.30 | 15.37 | 14.54 | 25.84 |

2. Evaluation of physical properties

1) Evaluation of dielectric breakdown voltage (BDV)

Dielectric breakdown voltages of each of five samples of a flat winding wire according to embodiments and comparative examples were measured at room temperature and an average value of the measured dielectric breakdown voltages was calculated. In detail, the metal shot method described above is a method, in which a sample of a winding wire bent using a mandrel having a radius of 25 mm is put at room temperature in a container filed with iron marbles, a voltage is applied thereto, and then a dielectric breakdown voltage is measured.

2) Evaluation of partial discharge inception voltage (PDIV)

A voltage with a sine wave of 60 Hz was applied at room temperature to each of the samples of a flat winding wire according to the embodiments and the comparative examples to measure a voltage at which a partial discharge began. Here, if a voltage at which an amount of charges of 100 pC or more was detected was less than 1,000 V when the voltage applied is increased, this voltage was considered as fail.

3) Evaluation of pulse resistance

1, 000 V (a sine wave of 10 kHz) was applied to each of the samples of a flat winding wire according to the embodiments and the comparative examples, and a time period elapsed until detection of leakage current of 50 mA or more was measured.

4) Evaluation of adhesion

In each of the samples of a flat winding wire according to the embodiments and the comparative examples, an insulation coating layer was cut in a widthwise direction and was then elongated by 15%. Thereafter, the distance between the insulation coating layer and a conductor was measured and recorded in the form of a multiple of the width W of the conductor. When the measured distance was 1W or more, it was considered as fail.

5) Evaluation of film crack resistance

Film flexibilities of samples of a flat copper wire according to embodiments and comparative examples were evaluated in accordance with the standard JIS C 3003, section 7.1.2. In detail, a sample in which cracks occurred among three samples bent using a mandrel with a diameter of 3W which is three times a width W of a conductor and three samples bent using a mandrel with a diameter 3T which is three times a height T of the conductor was considered as fail.
A result of the evaluation of physical properties is as shown in Table 2 below.

[Table 2]

| | Embodiment 1 | Embodiment 2 | Embodiment 3 | Embodiment 4 | Comparative example1 | Comparative example2 | Comparative example3 |
|---|---|---|---|---|---|---|---|
| Dielectric breakdown voltage (V) | 9900 | 9200 | 10600 | 11000 | 9000 | 8600 | 10000 |
| Partial discharge inception voltage | pass | pass | pass | pass | fail | fail | pass |
| Pulse resistance (hour) | 10↑ | 10↑ | 10↑ | 10↑ | 3 | 5 | 10↑ |
| Adhesion | pass | pass | pass | pass | pass | pass | fail |
| Film crack resistance: 3T mandrel | pass | pass | pass | pass | pass | pass | fail |
| Film crack resistance: 3W mandrel | pass | pass | pass | pass | pass | pass | fail |

As shown in Table 2 above, in each of corona-resistant flat winding wires accord to embodiments 1 to 4 of the present invention, that a thickness of an insulation coating layer (particularly, a surge-resistant varnish layer) and a rate of increase in the thickness thereof at curved parts were precisely controlled. Thus, it was revealed that characteristics such as a dielectric breakdown voltage, a partial discharge inception voltage, pulse resistance, etc. were good and an adhesion between a conductor and the surge-resistant varnish layer and film crack resistance of the insulation coating layer were good.
In contrast, it was revealed in each of flat winding wires according to comparative examples 1 and 2 that a rate of increase in the thickness of a surge-resistant varnish layer at curved parts was less than a reference level and thus corona-resistant properties such as a partial discharge inception voltage, pulse resistance, etc. were insufficient. In a flat winding wire according to comparative example 3, it was revealed that a rate of increase in the thickness of a surge-resistant varnish layer at curved parts was excessive and thus an insulating varnish layer at the curved parts was formed to an excessively thin thickness. Thus, film crack resistance was low and an adhesion between a conductor and the surge-resistant varnish layer was low.

**Claims**

1. A corona-resistant flat winding wire comprising:

   a conductor wire (10, 10') having a cross section having four upper, lower, left and right flat parts which are planar parts and four curved parts which are corner parts or having two upper and lower flat parts which are planar parts and two curved parts which are corner parts; and
   an insulation coating layer (20, 20') covering the conductor wire,

wherein the insulation coating layer comprises:

at least one surge-resistant varnish layer (21, 21') including polymer resin and an inorganic nanoparticle; and at least one insulating varnish layer (22, 22'), in which one of the at least one insulating varnish layers is adhered to the conductor wires and stacked below the surge-resistant varnish layer, including polymer resin, and

wherein a thickness increase rate in a total thickness of the one or more surge-resistant varnish layer(s) is greater than a thickness increase rate in a total thickness of the one or more insulating varnish layer(s), as defined in Equation 1 as follows:

[Equation 1]

$$\text{thickness increase rate (\%)} = \{(\text{layer thickness at curved part} - \text{layer thickness at flat part}) / \text{layer thickness at flat part}\} \times 100,$$

wherein layer thickness at curved part represents an average value of thickness values of the surge-resistant varnish layer or the insulating varnish layer measured at each of the curved parts of the conductor wire,

wherein layer thickness at flat part represents an average value of thickness values of the surge-resistant varnish layer or the insulating varnish layer measured at each of the flat parts of the conductor wire,

wherein the thickness value of the surge-resistant varnish layer or the insulating varnish layer at each of the curved parts and at each of the flat parts of the conductor wire is obtained by measuring straight-line distance to a measurement point from a reference point on each of the curved parts and on each of the flat parts,

when the conductor wire has four upper, lower, left and right flat parts which are planar parts and four curved parts which are corner parts, wherein the reference points on the curved parts are defined as points at the intersection of an outline of the conductor wire, the surge-resistant varnish layer or the insulating varnish layer formed directly below the surge-resistant varnish layer or the insulating varnish layer as a thickness measurement target and lines respectively connecting a center point and corners of a rectangle corresponding to the outline and the reference points on the flat parts are defined as points at the intersection of lines respectively connecting the center and sides of the rectangle and the outline, and wherein the measurement points on the curved parts are defined as points at the intersection of an outline of the surge-resistant varnish layer or the insulating varnish layer as the thickness measurement target and lines respectively connecting a center point and corners of a rectangle corresponding to the outline and the measurement points on the flat parts are defined as points at the intersection of lines respectively connecting the center and sides of the rectangle and the outline,

when the conductor wire has two upper and lower flat parts which are planar parts and two curved parts which are corner parts, wherein the reference points of the curved parts and the flat parts are defined as points at the intersection of an outline of the conductor wire, the surge-resistant varnish layer or the insulating varnish layer formed directly below the surge-resistant varnish layer or the insulating varnish layer as a thickness measurement target and lines respectively connecting a center point and sides of a rectangle corresponding to the outline, and wherein the measurement points of the curved parts and the flat parts are defined as points at the intersection of an outline of the surge-resistant varnish layer or the insulating varnish layer as a thickness measurement target and lines respectively connecting a center point and sides of a rectangle corresponding to the outline, and

wherein the thickness increase rate in the total thickness of the one or more surge-resistant varnish layer is 10 to 50%.

2. The corona-resistant flat winding wire of claim 1, wherein an average value of thickness values of the insulation coating layer is 70 to 120 $\mu$m.

3. The corona-resistant flat winding wire of claim 2, wherein the average value of thickness values of the surge-resistant varnish layer is 30 to 50% of the average value of thickness values of the insulation coating layer, and the average value of thickness values of the insulating varnish layer is 50 to 70% of the average value of thickness values of the insulation coating layer.

4. The corona-resistant flat winding wire of claim 3, wherein the insulating varnish layer comprises:

a first insulating varnish layer stacked between the conductor wire and the surge-resistant varnish layer; and
a second insulating varnish layer stacked on the surge-resistant varnish layer,
wherein each of the first insulating varnish layer and the second insulating varnish layer independently has an average value of thickness values which is 20 to 40% of the average value of thickness values of the insulation coating layer.

5. The corona-resistant flat winding wire of claim 4, wherein thickness values of the insulation coating layer at the curved parts are greater than those of the insulation coating layer at the flat parts.

6. The corona-resistant flat winding wire of claim 1, wherein a radius of curvature $R_1$ of a round of each of the curved parts of the conductor wire is greater than a radius of curvature $R_2$ of the insulation coating layer at the curved parts of the conductor wire.

7. The corona-resistant flat winding wire of claim 1, wherein the conductor wire is formed of oxygen-free electrolyte copper.

8. The corona-resistant flat winding wire of claim 1, wherein polymer resin contained in the insulation coating layer comprises at least one selected from the group consisting of polyamide-imide resin, polyimide resin, polyamide resin, polyvinyl formal resin, polyurethane resin, heat-resistant polyurethane resin, polyester resin, and polyesterimide resin.

9. The corona-resistant flat winding wire of claim 1, wherein the inorganic nanoparticle comprises at least one selected from the group consisting of silica, alumina, titanium dioxide, zirconia, yttria, mica, clay, zeolite, chromium oxide, zinc oxide, iron oxide, magnesium oxide, calcium oxide, scandium oxide, and barium oxide.

10. The corona-resistant flat winding wire of claim 9, wherein content of the inorganic nanoparticle is 5 to 15 parts by weight relative to 100 parts by weight of the polymer resin contained in the surge-resistant varnish layer.

11. The corona-resistant flat winding wire of claim 9, wherein the inorganic nanoparticle has a size of 5 to 100 nm, and a surface thereof is modified to have a hydrophobic property.

12. The corona-resistant flat winding wire of claim 1, wherein, when the surge-resistant varnish layer is formed on the conductor wire, the surge-resistant varnish layer additionally comprises an adhesion improver, and
when the insulating varnish layer includes a first insulating varnish layer formed on the conductor wire, the first insulating varnish layer additionally comprises an adhesion improver,
wherein the adhesion improver comprises at least one selected from the group consisting of a melamine-based adhesive, an amine-based adhesive, a mercaptan-based adhesive, and a polycarbodiimide adhesive.

13. A corona-resistant flat winding wire comprising:

a conductor wire (10, 10') having a cross section having four upper, lower, left and right flat parts which are planar parts and four curved parts which are corner parts or having two upper and lower flat parts which are planar parts and two curved parts which are corner parts; and
an insulation coating layer (20, 20') covering the conductor wire,
wherein the insulation coating layer comprises:

at least one surge-resistant varnish layer (21, 21') including polymer resin and an inorganic nanoparticle; and
at least one insulating varnish layer (22, 22'), in which one of the at least one insulating varnish layers is adhered to the conductor wires and stacked below the surge-resistant varnish layer, including polymer resin, and
wherein a thickness increase rate in a total thickness of the one or more surge-resistant varnish layer(s) is greater than a thickness increase rate in a total thickness of the one or more insulation coating layer(s), as defined in Equation 1 as follows:

[Equation 1]

$$\text{thickness increase rate (\%)} = \{(\text{layer thickness at curved part} - \text{layer thickness at flat part}) / \text{layer thickness at flat part}\} \times 100,$$

wherein layer thickness at curved part represents an average value of thickness values of the surge-resistant varnish layer or the insulating coating layer measured at each of the curved parts of the conductor wire, and layer thickness at flat part represents an average value of thickness values of the surge-resistant varnish layer or the insulation coating layer measured at each of the flat parts of the conductor wire,

wherein the thickness value of the surge-resistant varnish layer or the insulating varnish layer at each of the curved parts and at each of the flat parts of the conductor wire is obtained by measuring straight-line distance to a measurement point from a reference point on each of the curved parts and on each of the flat parts,

when the conductor wire has four upper, lower, left and right flat parts which are planar parts and four curved parts which are corner parts, wherein the reference points on the curved parts are defined as points at the intersection of an outline of the conductor wire, the surge-resistant varnish layer or the insulating varnish layer formed directly below the surge-resistant varnish layer or the insulating varnish layer as a thickness measurement target and lines respectively connecting a center point and corners of a rectangle corresponding to the outline and the reference points on the flat parts are defined as points at the intersection of lines respectively connecting the center and sides of the rectangle and the outline, and wherein the measurement points on the curved parts are defined as points at the intersection of an outline of the surge-resistant varnish layer or the insulating varnish layer as the thickness measurement target and lines respectively connecting a center point and corners of a rectangle corresponding to the outline and the measurement points on the flat parts are defined as points at the intersection of lines respectively connecting the center and sides of the rectangle and the outline,

when the conductor wire has two upper and lower flat parts which are planar parts and two curved parts which are corner parts, wherein the reference points of the curved parts and the flat parts are defined as points at the intersection of an outline of the conductor wire, the surge-resistant varnish layer or the insulating varnish layer formed directly below the surge-resistant varnish layer or the insulating varnish layer as a thickness measurement target and lines respectively connecting a center point and sides of a rectangle corresponding to the outline, and wherein the measurement points of the curved parts and the flat parts are defined as points at the intersection of an outline of the surge-resistant varnish layer or the insulating varnish layer as a thickness measurement target and lines respectively connecting a center point and sides of a rectangle corresponding to the outline, and

wherein the thickness increase rate in the total thickness of the one or more surge-resistant varnish layer is 10 to 50%.

14. The corona-resistant flat winding wire of claim 13, wherein an average value of thickness values of the insulation coating layer is 70 to 120 $\mu$m.

15. The corona-resistant flat winding wire of claim 14, wherein the average value of thickness values of the surge-resistant varnish layer is 30 to 50% of the average value of thickness values of the insulation coating layer, and the average value of thickness values of the insulating varnish layer is 50 to 70 % of the average value of thickness values of the insulation coating layer.

16. The corona-resistant flat winding wire of claim 15, wherein the insulating varnish layer comprises:

a first insulating varnish layer stacked between the conductor wire and the surge-resistant varnish layer; and a second insulating varnish layer stacked on the surge-resistant varnish layer, wherein each of the first insulating varnish layer and the second insulating varnish layer independently has an average value of thickness values which is 20 to 40% of the average value of thickness values of the insulation coating layer.

17. The corona-resistant flat winding wire of claim 13, wherein a radius of curvature $R_1$ of a round of each of the curved parts of the conductor wire is greater than a radius of curvature $R_2$ of the insulation coating layer at each of the curved parts of the conductor wire.

**Patentansprüche**

1. Koronabeständiger Flachwickeldraht, umfassend:

einen Leiterdraht (10, 10') mit einem Querschnitt, der vier flache Abschnitte, nämlich einen oberen, einen unteren, einen linken und einen rechten flachen Abschnitt, welche plane Abschnitte sind, und vier kurvenförmige Abschnitte, welche Eckabschnitte sind, aufweist oder der zwei flache Abschnitte, nämlich einen oberen und einen unteren flachen Abschnitt, welche plane Abschnitte sind, und zwei kurvenförmige Abschnitte, welche Eckabschnitte sind, aufweist; und
eine den Leiterdraht ummantelnde Isolierbeschichtung (20, 20'),
wobei die Isolierbeschichtung Folgendes umfasst:

mindestens eine Polymerharz und ein anorganisches Nanopartikel umfassende überspannungsresistente Lackschicht (21, 21'); und
mindestens eine Polymerharz umfassende isolierende Lackschicht (22, 22'), wobei die isolierende Lackschicht oder eine der isolierenden Lackschichten an dem Leiterdrähten haftet und unter die überspannungsresistente Lackschicht geschichtet ist, und
wobei eine Dickenzunahmerate einer Gesamtdicke der einen oder mehreren überspannungsresistenten Lackschicht/en größer als eine Dickenzunahmerate einer Gesamtdicke der einen oder mehreren isolierenden Lackschicht/en ist, wie in Gleichung 1 wie folgt definiert:

[Gleichung 1]

$$\text{Dickenzunahmerate } (\%) = \{(\text{Schichtdicke an dem kurvenförmigen Abschnitt} - \text{Schichtdicke an dem flachen Abschnitt})/\text{Schichtdicke an dem flachen Abschnitt}\} \times 100,$$

wobei eine Schichtdicke an dem kurvenförmigen Abschnitt für einen Durchschnittswert von an jedem der kurvenförmigen Abschnitte des Leiterdrahts gemessenen Dickenwerten der überspannungsresistenten Lackschicht oder der isolierenden Lackschicht steht,
wobei eine Schichtdicke an dem flachen Abschnitt für einen Durchschnittswert von an jedem der flachen Abschnitte des Leiterdrahts gemessenen Dickenwerten der überspannungsresistenten Lackschicht oder der isolierenden Lackschicht steht,
wobei der Dickenwert der überspannungsresistenten Lackschicht oder der isolierenden Lackschicht an jedem der kurvenförmigen Abschnitte und an jedem der flachen Abschnitte des Leiterdrahtes durch das Messen des direkten Abstandes von einem Referenzpunkt auf jedem der kurvenförmigen Abschnitte und auf jedem der flachen Abschnitte zu einem Messpunkt erhalten wird,
wobei, wenn der Leiterdraht vier flache Abschnitte, nämlich einen oberen, einen unteren, einen linken und einen rechten flachen Abschnitt, welche plane Abschnitte sind, und vier kurvenförmige Abschnitte, welche Eckabschnitte sind, aufweist, die Referenzpunkte an den kurvenförmigen Abschnitten als Punkte an dem Schnittpunkt einer Umrisslinie des Leiterdrahtes, der überspannungsresistenten Lackschicht oder der isolierenden Lackschicht, welche direkt unter der überspannungsresistenten Lackschicht oder der isolierenden Lackschicht ausgebildet sind, die ein Dickenmessziel darstellen, und jeweils einen Mittelpunkt mit Ecken eines der Umrisslinie entsprechenden Rechtecks verbindender Linien definiert sind und die Referenzpunkte an den flachen Abschnitten als Punkte an dem Schnittpunkt jeweils die Mitte mit Seiten des Rechtecks verbindender Linien und der Umrisslinie definiert sind und die Messpunkte an den kurvenförmigen Abschnitten als Punkte an dem Schnittpunkt einer Umrisslinie der überspannungsresistenten Lackschicht oder der isolierenden Lackschicht, die das Dickenmessziel darstellen, und jeweils einen Mittelpunkt mit Ecken eines der Umrisslinie entsprechenden Rechtecks verbindender Linien definiert sind und die Messpunkte an den flachen Abschnitten als Punkte an dem Schnittpunkt jeweils die Mitte mit Seiten des Rechtecks verbindender Linien und der Umrisslinie definiert sind,
wobei, wenn der Leiterdraht zwei flache Abschnitte, nämlich einen oberen und einen unteren flachen Abschnitt, welche plane Abschnitte sind, und zwei kurvenförmige Abschnitte, welche Eckabschnitte sind, aufweist, die Referenzpunkte der kurvenförmigen Abschnitte und der flachen Abschnitte als Punkte an dem Schnittpunkt einer Umrisslinie des Leiterdrahtes, der überspannungsresistenten Lackschicht oder
der isolierenden Lackschicht, welche direkt unter der überspannungsresistenten Lackschicht oder der isolierenden Lackschicht ausgebildet sind, die ein Dickenmessziel darstellen, und jeweils einen Mittelpunkt mit Seiten eines der Umrisslinie entsprechenden Rechtecks verbindender Linien definiert sind und die Messpunkte der kurvenförmigen Abschnitte und der flachen Abschnitte als Punkte an dem Schnittpunkt einer Umrisslinie der überspannungsresistenten Lackschicht oder der isolierenden Lackschicht, die das Dickenmessziel darstellen, und jeweils einen Mittelpunkt mit Seiten eines der Umrisslinie entsprechenden Rechtecks verbindender Linien definiert sind und

wobei die Dickenzunahmerate der Gesamtdicke der einen oder mehreren überspannungsresistenten Lackschicht/en 10 % bis 50 % beträgt.

2. Koronabeständiger Flachwickeldraht nach Anspruch 1, wobei ein Durchschnittswert von Dickenwerten der Isolierbeschichtung 70 $\mu$m bis 120 $\mu$m beträgt.

3. Koronabeständiger Flachwickeldraht nach Anspruch 2, wobei der Durchschnittswert von Dickenwerten der überspannungsresistenten Lackschicht 30 % bis 50 % des Durchschnittswertes von Dickenwerten der Isolierbeschichtung beträgt und der Durchschnittswert von Dickenwerten der isolierenden Lackschicht 50 % bis 70 % des Durchschnittswertes von Dickenwerten der Isolierbeschichtung beträgt.

4. Koronabeständiger Flachwickeldraht nach Anspruch 3, wobei die isolierende Lackschicht Folgendes umfasst:

eine zwischen den Leiterdraht und die überspannungsresistente Lackschicht geschichtete erste isolierende Lackschicht; und
eine auf die überspannungsresistente Lackschicht geschichtete zweite isolierende Lackschicht;
wobei die erste isolierende Lackschicht und die zweite isolierende Lackschicht unabhängig voneinander jeweils einen Durchschnittswert von Dickenwerten aufweisen, der 20 % bis 40 % des Durchschnittswertes von Dickenwerten der Isolierbeschichtung beträgt.

5. Koronabeständiger Flachwickeldraht nach Anspruch 4, wobei die Dickenwerte der Isolierbeschichtung an den kurvenförmigen Abschnitten größer als diejenigen der Isolierbeschichtung an den flachen Abschnitten sind.

6. Koronabeständiger Flachwickeldraht nach Anspruch 1, wobei ein Krümmungsradius $R_1$ einer Rundung jedes der kurvenförmigen Abschnitte des Leiterdrahtes größer als ein Krümmungsradius $R_2$ der Isolierbeschichtung an den kurvenförmigen Abschnitten des Leiterdrahtes ist.

7. Koronabeständiger Flachwickeldraht nach Anspruch 1, wobei der Leiterdraht aus sauerstofffreiem Elektrolytkupfer ausgebildet ist.

8. Koronabeständiger Flachwickeldraht nach Anspruch 1, wobei in der Isolierbeschichtung enthaltenes Polymerharz mindestens ein Harz aus der Gruppe, bestehend aus Polyamidimidharz, Polyimidharz Polyamidharz, Polyvinylformalharz, Polyurethanharz, hitzefestes Polyurethanharz, Polyesterharz und Polyesterimidharz, umfasst.

9. Koronabeständiger Flachwickeldraht nach Anspruch 1, wobei das anorganische Nanopartikel mindestens ein Nanopartikel aus der Gruppe, bestehend aus Siliciumdioxid, Aluminiumoxid, Titandioxid, Zirconiumdioxid, Yttriumoxid, Mika, Ton, Zeolith, Chromoxid, Zinkoxid, Eisenoxid, Magnesiumoxid, Calciumoxid, Scandiumoxid und Bariumoxid, umfasst.

10. Koronabeständiger Flachwickeldraht nach Anspruch 9, wobei der Anteil des anorganischen Nanopartikels bezogen auf 100 Gewichtsteile des in der überspannungsresistenten Lackschicht enthaltenen Polymerharzes 5 bis 15 Gewichtsteile beträgt.

11. Koronabeständiger Flachwickeldraht nach Anspruch 9, wobei das anorganische Nanopartikel eine Größe von 5 nm bis 100 nm aufweist und eine Oberfläche des Nanopartikels derart modifiziert ist, dass es eine wasserabweisende Eigenschaft aufweist.

12. Koronabeständiger Flachwickeldraht nach Anspruch 1, wobei die überspannungsresistente Lackschicht, wenn die überspannungsresistente Lackschicht auf dem Leiterdraht ausgebildet ist, zusätzlich einen Haftverbesserer umfasst und
wobei, wenn die isolierende Lackschicht eine auf dem Leiterdraht ausgebildete erste isolierende Lackschicht umfasst, die erste isolierende Lackschicht zusätzlich einen Haftverbesserer umfasst,

wobei der Haftverbesserer mindestens einen Haftverbesserer aus der Gruppe, bestehend aus einem Haftmittel auf der Basis von Melamin, einem Haftmittel auf der Basis von Amin, einem Haftmittel auf der Basis von Mercaptan und einem Polycarbodiimid-Haftmittel, umfasst.

**13.** Koronabeständiger Flachwickeldraht, umfassend:

einen Leiterdraht (10, 10') mit einem Querschnitt, der vier flache Abschnitte, nämlich einen oberen, einen unteren, einen linken und einen rechten flachen Abschnitt, welche plane Abschnitte sind, und vier kurvenförmige Abschnitte, welche Eckabschnitte sind, aufweist oder der zwei flache Abschnitte, nämlich einen oberen und einen unteren flachen Abschnitt, welche plane Abschnitte sind, und zwei kurvenförmige Abschnitte, welche Eckabschnitte sind, aufweist; und
eine den Leiterdraht ummantelnde Isolierbeschichtung (20, 20'),
wobei die Isolierbeschichtung Folgendes umfasst:

mindestens eine Polymerharz und ein anorganisches Nanopartikel umfassende überspannungsresistente Lackschicht (21, 21'); und
mindestens eine Polymerharz umfassende isolierende Lackschicht (22, 22'), wobei die isolierende Lackschicht oder eine der isolierenden Lackschichten an dem Leiterdrähten haftet und unter die überspannungsresistente Lackschicht geschichtet ist, und
wobei eine Dickenzunahmerate einer Gesamtdicke der einen oder mehreren überspannungsresistenten Lackschicht/en größer als eine Dickenzunahmerate einer Gesamtdicke der einen oder mehreren Isolierbeschichtung/en ist, wie in Gleichung 1 wie folgt definiert:

[Gleichung 1]

$$\text{Dickenzunahmerate (\%)} = \{(\text{Schichtdicke an dem kurvenförmigen Abschnitt} - \text{Schichtdicke an dem flachen Abschnitt})/\text{Schichtdicke an dem flachen Abschnitt}\} \times 100,$$

wobei eine Schichtdicke an dem kurvenförmigen Abschnitt für einen Durchschnittswert von an jedem der kurvenförmigen Abschnitte des Leiterdrahts gemessenen Dickenwerten der überspannungsresistenten Lackschicht oder der Isolierbeschichtung steht und
eine Schichtdicke an dem flachen Abschnitt für einen Durchschnittswert von an jedem der flachen Abschnitte des Leiterdrahts gemessenen Dickenwerten der überspannungsresistenten Lackschicht oder der Isolierbeschichtung steht,
wobei der Dickenwert der überspannungsresistenten Lackschicht oder der isolierenden Lackschicht an jedem der kurvenförmigen Abschnitte und an jedem der flachen Abschnitte des Leiterdrahtes durch das Messen des direkten Abstandes von einem Referenzpunkt auf jedem der kurvenförmigen Abschnitte und auf jedem der flachen Abschnitte zu einem Messpunkt erhalten wird,
wobei, wenn der Leiterdraht vier flache Abschnitte, nämlich einen oberen, einen unteren, einen linken und einen rechten flachen Abschnitt, welche plane Abschnitte sind, und vier kurvenförmige Abschnitte, welche Eckabschnitte sind, aufweist, die Referenzpunkte an den kurvenförmigen Abschnitten als Punkte an dem Schnittpunkt einer Umrisslinie des Leiterdrahtes, der überspannungsresistenten Lackschicht oder der isolierenden Lackschicht, welche direkt unter der überspannungsresistenten Lackschicht oder der isolierenden Lackschicht ausgebildet sind, die ein Dickenmessziel darstellen, und jeweils einen Mittelpunkt mit Ecken eines der Umrisslinie entsprechenden Rechtecks verbindender Linien definiert sind und die Referenzpunkte an den flachen Abschnitten als Punkte an dem Schnittpunkt jeweils die Mitte mit Seiten des Rechtecks verbindender Linien und der Umrisslinie definiert sind und die Messpunkte an den kurvenförmigen Abschnitten als Punkte an dem Schnittpunkt einer Umrisslinie der überspannungsresistenten Lackschicht oder der isolierenden Lackschicht, die das Dickenmessziel darstellen, und jeweils einen Mittelpunkt mit Ecken eines der Umrisslinie entsprechenden Rechtecks verbindender Linien definiert sind und die Messpunkte an den flachen Abschnitten als Punkte an dem Schnittpunkt jeweils die Mitte mit Seiten des Rechtecks verbindender Linien und der Umrisslinie definiert sind,
wobei, wenn der Leiterdraht zwei flache Abschnitte, nämlich einen oberen und einen unteren flachen Abschnitt, welche plane Abschnitte sind, und zwei kurvenförmige Abschnitte, welche Eckabschnitte sind, aufweist, die Referenzpunkte der kurvenförmigen Abschnitte und der flachen Abschnitte als Punkte an dem Schnittpunkt einer Umrisslinie des Leiterdrahtes, der überspannungsresistenten Lackschicht oder der isolierenden Lackschicht, welche direkt unter der überspannungsresistenten Lackschicht oder der isolierenden Lackschicht ausgebildet sind, die ein Dickenmessziel darstellen, und jeweils einen Mittelpunkt mit Seiten eines der Umrisslinie entsprechenden Rechtecks verbindender Linien definiert sind und die Messpunkte der kurvenförmigen Abschnitte und der flachen Abschnitte als Punkte an dem Schnittpunkt einer Umrisslinie der überspannungsresistenten Lackschicht oder der isolierenden Lackschicht, die das Dickenmessziel darstellen, und jeweils einen Mittelpunkt mit Seiten eines der Umrisslinie entsprechenden Rechtecks verbindende Linien definiert sind und

wobei die Dickenzunahmerate der Gesamtdicke der einen oder mehreren überspannungsresistenten Lackschicht/en 10 % bis 50 % beträgt.

**14.** Koronabeständiger Flachwickeldraht nach Anspruch 13, wobei ein Durchschnittswert von Dickenwerten der Isolierbeschichtung 70 $\mu$m bis 120 $\mu$m beträgt.

**15.** Koronabeständiger Flachwickeldraht nach Anspruch 14, wobei der Durchschnittswert von Dickenwerten der überspannungsresistenten Lackschicht 30 % bis 50 % des Durchschnittswertes von Dickenwerten der Isolierbeschichtung beträgt und der Durchschnittswert von Dickenwerten der isolierenden Lackschicht 50 % bis 70 % des Durchschnittswertes von Dickenwerten der Isolierbeschichtung beträgt.

**16.** Koronabeständiger Flachwickeldraht nach Anspruch 15, wobei die isolierende Lackschicht Folgendes umfasst:

eine zwischen den Leiterdraht und die überspannungsresistente Lackschicht geschichtete erste isolierende Lackschicht; und
eine auf die überspannungsresistente Lackschicht geschichtete zweite isolierende Lackschicht;
wobei die erste isolierende Lackschicht und die zweite isolierende Lackschicht unabhängig voneinander jeweils einen Durchschnittswert von Dickenwerten aufweisen, der 20 % bis 40 % des Durchschnittswertes von Dickenwerten der Isolierbeschichtung beträgt.

**17.** Koronabeständiger Flachwickeldraht nach Anspruch 13, wobei ein Krümmungsradius $R_1$ einer Rundung jedes der kurvenförmigen Abschnitte des Leiterdrahtes größer als ein Krümmungsradius $R_2$ der Isolierbeschichtung an jedem der kurvenförmigen Abschnitte des Leiterdrahtes ist.

## Revendications

**1.** Fil de bobinage plat résistant à l'effet de couronne, comprenant :

un fil conducteur (10, 10') ayant une section transversale ayant quatre parties plates, soit une partie supérieure, une partie inférieure, une partie gauche et une partie droite, qui sont des parties planes et quatre parties courbées qui sont des parties d'angle ou ayant deux parties plates, soit une partie supérieure et une partie inférieure, qui sont des parties planes et deux parties courbées qui sont des parties d'angle ; et
une couche (20, 20') de revêtement d'isolation revêtant le fil conducteur,
dans lequel la couche de revêtement d'isolation comprend :

au moins une couche (21, 21') de vernis résistante aux surtensions incluant de la résine polymère et une nanoparticule inorganique ; et
au moins une couche (22, 22') de vernis isolante incluant de la résine polymère, la couche de vernis isolante ou une des couches de vernis isolantes étant adhérée aux fils conducteurs et étant empilée sous la couche de vernis résistante aux surtensions, et
dans lequel un taux d'augmentation d'épaisseur d'une épaisseur totale de l'une couche de vernis résistante aux surtensions ou des plusieurs couches de vernis résistantes aux surtensions est supérieur à un taux d'augmentation d'épaisseur d'une épaisseur totale de l'une couche de vernis isolante ou des plusieurs couches de vernis isolantes, tel que défini dans l'Équation 1 comme suit :

[Équation 1]

$$\text{taux d'augmentation d'épaisseur (\%)} = \{(\text{épaisseur de couche à la partie courbée} - \text{épaisseur de couche à la partie plate})/\text{épaisseur de couche à la partie plate}\} \times 100,$$

dans lequel une épaisseur de couche à une partie courbée représente une valeur moyenne des valeurs d'épaisseur de la couche de vernis résistante aux surtensions ou de la couche de vernis isolante mesurée à chacune des parties courbées du fil conducteur,

dans lequel une épaisseur de couche à une partie plate représente une valeur moyenne des valeurs d'épaisseur de la couche de vernis résistante aux surtensions ou de la couche de vernis isolante mesurée à chacune des parties plates du fil conducteur,

dans lequel la valeur d'épaisseur de la couche de vernis résistante aux surtensions ou de la couche de vernis isolante à chacune des parties courbées et à chacune des parties plates du fil conducteur est obtenue en mesurant la distance en ligne droite d'un point de référence sur chacune des parties courbées et sur chacune des parties plates à un point de mesure,

dans lequel, lorsque le fil conducteur a quatre parties plates, soit une partie supérieure, une partie inférieure, une partie gauche et une partie droite, qui sont des parties planes et quatre parties courbées qui sont des parties d'angle, les points de référence sur les parties courbées sont définies comme points à l'intersection d'un contour du fil conducteur, de la couche de vernis résistante aux surtensions ou de la couche de vernis isolante formée directement sous la couche de vernis résistante aux surtensions ou la couche de vernis isolante comme cible de mesure de l'épaisseur et des lignes reliant chacune un point central avec des angles d'un rectangle correspondant au contour et les points de référence sur les parties plates sont définies comme points à l'intersection des lignes reliant chacune le centre avec des côtés du rectangle et du contour, et les points de mesure sur les parties courbées sont définies comme points à l'intersection d'un contour de la couche de vernis résistante aux surtensions ou de la couche de vernis isolante comme cible de mesure de l'épaisseur et des lignes reliant chacune un point central avec des angles d'un rectangle correspondant au contour et les points de mesure sur les parties plates sont définies comme points à l'intersection des lignes reliant chacune le centre avec des côtés du rectangle et du contour,

dans lequel, lorsque le fil conducteur a deux parties plates, soit une partie supérieure et une partie inférieure, qui sont des parties planes et deux parties courbées qui sont des parties d'angle, les points de référence des parties courbées et des parties plates sont définies comme points à l'intersection d'un contour du fil conducteur, de la couche de vernis résistante aux surtensions ou de la couche de vernis isolante formée directement sous la couche de vernis résistante aux surtensions ou la couche de vernis isolante comme cible de mesure de l'épaisseur et des lignes reliant chacune un point central avec des côtés d'un rectangle correspondant au contour et les points de mesure des parties courbées et des parties plates sont définies comme points à l'intersection d'un contour de la couche de vernis résistante aux surtensions ou de la couche de vernis isolante comme cible de mesure de l'épaisseur et des lignes reliant chacune un point central avec des côtés du rectangle correspondant au contour, et

dans lequel le taux d'augmentation d'épaisseur de l'épaisseur totale de l'une couche de vernis résistante aux surtensions ou des plusieurs couches de vernis résistantes aux surtensions est 10 % à 50 %.

2. Fil de bobinage plat résistant à l'effet de couronne selon la revendication 1, dans lequel une valeur moyenne des valeurs d'épaisseur de la couche de revêtement d'isolation est 70 $\mu$m à 120 $\mu$m.

3. Fil de bobinage plat résistant à l'effet de couronne selon la revendication 2, dans lequel la valeur moyenne des valeurs d'épaisseur de la couche de vernis résistante aux surtensions est 30 % à 50 % de la valeur moyenne des valeurs d'épaisseur de la couche de revêtement d'isolation, et la valeur moyenne des valeurs d'épaisseur de la couche de vernis isolante est 50 % à 70 % de la valeur moyenne des valeurs d'épaisseur de la couche de revêtement d'isolation.

4. Fil de bobinage plat résistant à l'effet de couronne selon la revendication 3, dans lequel la couche de vernis isolante comprend :

une première couche de vernis isolante empilée entre le fil conducteur et la couche de vernis résistante aux surtensions ; et
une deuxième couche de vernis isolante empilée sur la couche de vernis résistante aux surtensions,

dans lequel la première couche de vernis isolante et la deuxième couche de vernis isolante ont chacune, indépendamment l'une de l'autre, une valeur moyenne des valeurs d'épaisseur qui est de 20 % à 40 % de la valeur moyenne des valeurs d'épaisseur de la couche de revêtement d'isolation.

5. Fil de bobinage plat résistant à l'effet de couronne selon la revendication 4, dans lequel les valeurs d'épaisseur de la couche de revêtement d'isolation aux parties courbées sont supérieures à celles de la couche de revêtement d'isolation aux parties plates.

6. Fil de bobinage plat résistant à l'effet de couronne selon la revendication 1, dans lequel un rayon de courbure $R_1$ d'une rondeur de chacune des parties courbées du fil conducteur est supérieur à un rayon de courbure $R_2$ de la couche de revêtement d'isolation aux parties courbées du fil conducteur.

7. Fil de bobinage plat résistant à l'effet de couronne selon la revendication 1, dans lequel le fil conducteur est formé d'un électrolyte-cuivre sans oxygène.

8. Fil de bobinage plat résistant à l'effet de couronne selon la revendication 1, dans lequel une résine polymère contenue dans la couche de revêtement d'isolation comprend au moins une résine choisie dans le groupe comprenant la résine de polyamide imide, la résine de polyimide, la résine de polyamide, la résine de formal polyvinylique, la résine de polyuréthane, la résine de polyuréthane résistante à la chaleur, la résine de polyester et la résine de polyestérimide.

9. Fil de bobinage plat résistant à l'effet de couronne selon la revendication 1, dans lequel la nanoparticule inorganique comprend au moins une nanoparticule choisie dans le groupe comprenant la silice, l'alumine, le dioxyde de titane, le dioxyde de zirconium, l'oxyde d'yttrium, le mica, l'argile, la zéolite, l'oxyde de chrome, l'oxyde de zinc, l'oxyde de fer, l'oxyde de magnésium, l'oxyde de calcium, l'oxyde de scandium el l'oxyde de baryum.

10. Fil de bobinage plat résistant à l'effet de couronne selon la revendication 9, dans lequel la teneur de la nanoparticule inorganique est de 5 à 15 parties en poids par rapport à 100 parties en poids de la résine polymère contenue dans la couche de vernis résistante aux surtensions.

11. Fil de bobinage plat résistant à l'effet de couronne selon la revendication 9, dans lequel la nanoparticule inorganique a une taille de 5 nm à 100 nm et une surface de ladite nanoparticule est modifiée de manière à avoir un propriété hydrophobe.

12. Fil de bobinage plat résistant à l'effet de couronne selon la revendication 1, dans lequel la couche de vernis résistante aux surtensions, en outre, comprend un agent d'amélioration de l'adhérence lorsque la couche de vernis résistante aux surtensions est formée sur le fil conducteur, et
dans lequel, lorsque la couche de vernis isolante inclut une première couche de vernis isolante formée sur le fil conducteur, la première couche de vernis isolante, en outre, comprend un agent d'amélioration de l'adhérence,
dans lequel l'agent d'amélioration de l'adhérence comprend au moins un agent d'amélioration de l'adhérence choisi dans le groupe comprenant l'adhésif à base de mélamine, l'adhésif à base d'amine, l'adhésif à base de mercaptan et l'adhésif à base de polycarbodiimide.

13. Fil de bobinage plat résistant à l'effet de couronne, comprenant :

un fil conducteur (10, 10') ayant une section transversale ayant quatre parties plates, soit une partie supérieure, une partie inférieure, une partie gauche et une partie droite, qui sont des parties planes et quatre parties courbées qui sont des parties d'angle ou ayant deux parties plates, soit une partie supérieure et une partie inférieure, qui sont des parties planes et deux parties courbées qui sont des parties d'angle ; et
une couche (20, 20') de revêtement d'isolation revêtant le fil conducteur,
dans lequel la couche de revêtement d'isolation comprend :

au moins une couche (21, 21') de vernis résistante aux surtensions incluant de la résine polymère et une nanoparticule inorganique ; et
au moins une couche (22, 22') de vernis isolante incluant de la résine polymère, la couche de vernis isolante ou une des couches de vernis isolantes étant adhérée aux fils conducteurs et étant empilée sous la couche de vernis résistante aux surtensions, et
dans lequel un taux d'augmentation d'épaisseur d'une épaisseur totale de l'une couche de vernis résistante aux surtensions ou des plusieurs couches de vernis résistantes aux surtensions est supérieur à un taux d'augmentation d'épaisseur d'une épaisseur totale de l'une couche de revêtement d'isolation ou des plusieurs couches de revêtement d'isolation, tel que défini dans l'Équation 1 comme suit :

[Équation 1]

taux d'augmentation d'épaisseur (%) = {(épaisseur de couche à la partie courbée - épaisseur de couche à la partie plate)⁄épaisseur de couche à la partie plate} × 100,

dans lequel une épaisseur de couche à une partie courbée représente une valeur moyenne des valeurs d'épaisseur de la couche de vernis résistante aux surtensions ou de la couche de revêtement d'isolation mesurée à chacune des parties courbées du fil conducteur, et

une épaisseur de couche à une partie plate représente une valeur moyenne des valeurs d'épaisseur de la couche de vernis résistante aux surtensions ou de la couche de revêtement d'isolation mesurée à chacune des parties plates du fil conducteur,

dans lequel la valeur d'épaisseur de la couche de vernis résistante aux surtensions ou de la couche de vernis isolante à chacune des parties courbées et à chacune des parties plates du fil conducteur est obtenue en mesurant la distance en ligne droite d'un point de référence sur chacune des parties courbées et sur chacune des parties plates à un point de mesure,

dans lequel, lorsque le fil conducteur a quatre parties plates, soit une partie supérieure, une partie inférieure, une partie gauche et une partie droite, qui sont des parties planes et quatre parties courbées qui sont des parties d'angle, les points de référence sur les parties courbées sont définies comme points à l'intersection d'un contour du fil conducteur, de la couche de vernis résistante aux surtensions ou de la couche de vernis isolante formée directement sous la couche de vernis résistante aux surtensions ou la couche de vernis isolante comme cible de mesure de l'épaisseur et des lignes reliant chacune un point central avec des angles d'un rectangle correspondant au contour et les points de référence sur les parties plates sont définies comme points à l'intersection des lignes reliant chacune le centre avec des côtés du rectangle et du contour, et les points de mesure sur les parties courbées sont définies comme points à l'intersection d'un contour de la couche de vernis résistante aux surtensions ou de la couche de vernis isolante comme cible de mesure de l'épaisseur et des lignes reliant chacune un point central avec des angles d'un rectangle correspondant au contour et les points de mesure sur les parties plates sont définies comme points à l'intersection des lignes reliant chacune le centre avec des côtés du rectangle et du contour,

dans lequel, lorsque le fil conducteur a deux parties plates, soit une partie supérieure et une partie inférieure, qui sont des parties planes et deux parties courbées qui sont des parties d'angle, les points de référence des parties courbées et des parties plates sont définies comme points à l'intersection d'un contour du fil conducteur, de la couche de vernis résistante aux surtensions ou de la couche de vernis isolante formée directement sous la couche de vernis résistante aux surtensions ou la couche de vernis isolante comme cible de mesure de l'épaisseur et des lignes reliant chacune un point central avec des côtés d'un rectangle correspondant au contour et

les points de mesure des parties courbées et des parties plates sont définies comme points à l'intersection d'un contour de la couche de vernis résistante aux surtensions ou de la couche de vernis isolante comme cible de mesure de l'épaisseur et des lignes reliant chacune un point central avec des côtés du rectangle correspondant au contour, et

dans lequel le taux d'augmentation d'épaisseur de l'épaisseur totale de l'une couche de vernis résistante aux surtensions ou des plusieurs couches de vernis résistantes aux surtensions est 10 % à 50 %.

14. Fil de bobinage plat résistant à l'effet de couronne selon la revendication 13, dans lequel une valeur moyenne des valeurs d'épaisseur de la couche de revêtement d'isolation est 70 μm à 120 μm.

15. Fil de bobinage plat résistant à l'effet de couronne selon la revendication 14, dans lequel la valeur moyenne des valeurs d'épaisseur de la couche de vernis résistante aux surtensions est 30 % à 50 % de la valeur moyenne des valeurs d'épaisseur de la couche de revêtement d'isolation, et

la valeur moyenne des valeurs d'épaisseur de la couche de vernis isolante est 50 % à 70 % de la valeur moyenne des valeurs d'épaisseur de la couche de revêtement d'isolation.

16. Fil de bobinage plat résistant à l'effet de couronne selon la revendication 15, dans lequel la couche de vernis isolante comprend :

une première couche de vernis isolante empilée entre le fil conducteur et la couche de vernis résistante aux surtensions ; et
une deuxième couche de vernis isolante empilée sur la couche de vernis résistante aux surtensions,
dans lequel la première couche de vernis isolante et la deuxième couche de vernis isolante ont chacune, indépendamment l'une de l'autre, une valeur moyenne des valeurs d'épaisseur qui est de 20 % à 40 % de la valeur moyenne des valeurs d'épaisseur de la couche de revêtement d'isolation.

17. Fil de bobinage plat résistant à l'effet de couronne selon la revendication 13, dans lequel un rayon de courbure $R_1$ d'une rondeur de chacune des parties courbées du fil conducteur est supérieur à un rayon de courbure $R_2$ de la couche de revêtement d'isolation à chacune des parties courbées du fil conducteur.

【Fig. 1】

【Fig. 2】

【Fig. 3】

【Fig. 4】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010055965 A
- JP 2009123418 A
- WO 2015098637 A
- KR 20150101023
- US 6403890 B
- US 4493873 A
- US 6180888 B
- JP 2003036731 A
- DE 4209964